# EUROPEAN PATENT SPECIFICATION

(11) **EP 1 530 899 B1**
(45) Date of publication and mention of the grant of the patent: **01.10.2008**
(21) Application number: 04256940.0
(22) Date of filing: 09.11.2004
(51) Int. Cl.: A01M 29/00

(54) **Restricting migration of animals, for example onto a worksite**
Beschränkung der Wanderung von Tieren, z.B. auf einem Bauplatz
Restriction de la migration d'animaux, par exemple sur un chantier

(30) Priority: 12.11.2003 GB 0326347
(43) Date of publication of application: 18.05.2005
(73) Proprietor: Jenman, Keith, 20 Quay 2000 10 Horseshoe Bridge Southampton SO17 2NP (GB)
(72) Inventor: Jenman, Keith, 20 Quay 2000 10 Horseshoe Bridge Southampton SO17 2NP (GB)
(74) Representative: Targett, Kenneth Stanley

(56) References cited:
- DE-A1- 10 150 288
- DE-A1- 19 831 790
- DE-U1- 8 604 767
- GB-A- 2 359 724
- US-A- 5 771 641
- US-A- 6 158 923
- DATABASE WPI Section PQ, Week 200201 Derwent Publications Ltd., London, GB; Class P14, AN 2002-002884 XP002315953 -& JP 2001 245546 A (NICHIANOUGYO KK) 11 September 2001 (2001-09-11)

## Description

This invention relates to (i) a method of restricting migration of animals, (ii) a barrier for that purpose, and (iii) a kit for use in performing such a method or for constructing such a barrier.

It is sometimes necessary to carry out works at a site that is inhabited by small animals including reptiles (such as snakes and lizards), amphibians (such as newts and frogs) and mammals (such a water voles and dormice) and similar animals (herein referred to as small animals), for example on the side of a motorway. Some of these animals are protected species in the United Kingdom or elsewhere. When such works are carried out, there is a risk that the inhabitants may be injured or killed by moving machinery or workmen, by materials dropped on the ground, by spillage of toxic substances, or by noise or ground vibration. In order to reduce that risk, it is known to prepare the worksite by building a temporary barrier around it. The barrier restricts the migration of small animals into the worksite, and as many small animals as can be found already on the worksite are manually evacuated to the outside of the barrier before work begins.

In a known method of constructing such a barrier, a trench is cut in the ground to a depth of about 0.3 m (1 ft) and wooden stakes are driven into the ground in, or immediately to the side of, the trench so that they project upwards by at least about 0.6m (2 ft) above the bottom of the trench. Flexible polyethylene sheet is then taken from a roll and attached, by battens and nails or staples, to the sides of the stakes so that the polyethylene sheet extends from stake to stake and from the top of each stake to the bottom of the trench. The trench can then be backfilled if desired. The resultant barrier extends to a sufficient height above the ground that many such small animals will not attempt to, or be able to, climb or jump over it, and it extends to a sufficient depth below the ground that most such small animals will not attempt to, or be able to, burrow under it. Once the works on the site have been completed, the idea is that the stakes and polyethylene sheet are removed from the site.

Although this general idea is "environmentally friendly", the known temporary barrier has proved not to be particularly environmentally friendly. Especially if the polyethylene sheet is folded at the bottom of the trench, it can be difficult to remove from the ground and so sometimes at least the buried part of the sheet is left in the ground, therefore leaving a barrier below ground to the animals which is at least semi-permanent even if biodegradable polyethylene is used. In any case, after use, the polyethylene sheet is often not in a fit state to be used again and is disposed of, which is wasteful of resources. In an attempt not to be wasteful of resources and to facilitate driving of them into the ground, stakes are used of small cross-section, e.g. nominally about 50.8 x 50.8 mm (2 by 2), but often the stakes are broken, either while work is carried out on the site, or when an attempt is subsequently made to remove them, and so the stakes cannot be reused, which is wasteful of resources. Even if the stakes can be reused, the nails or staples, battens and any remnants of the polyethylene sheet need to be removed from them, which is laborious. Other problems with the known method are that the driving of the stakes into the ground and the fixing of the polyethylene sheet to them is laborious. Also, in the case of undulating ground, it is necessary to form darts in the polyethylene sheet in order to keep the sheet taut and prevent it flapping in the wind.

The present invention, or at least specific embodiments of it, is concerned with overcoming at least to some extent some of the problems mentioned above.

In accordance with a first aspect of the present invention, there is provided a method of restricting migration of animals from the ground on one side of a line to the ground on the other side of the line, the method comprising the steps of: cutting a trench in the ground along the line; setting a rigid or semi-rigid panel in the trench so that the panel projects upwards above the level of the ground; providing a staple having a pair of elongate tines connected by a bridging portion so that the tines extend downwardly, from the bridging portion, on either side of the panel to locate the panel therebetween; and driving the staple into the ground, after the panel has been set in the ground, so that the tines restrict sideways movement of the panel and the bridging portion restricts upward movement of the panel. Because a panel is used that is rigid or semi-rigid, it does not need to be held in tension, and for that reason it does not need to be positively attached to the members with nails, staples or the like. Also, because the panel is located between the tines to restrict sideways movement of the panel, for that reason also it does not need to be positively attached to the members with nails, staples or the like. Because the panel is rigid or semi-rigid, it can be more readily fabricated so that it can be drawn out of the ground once it is no longer required. Because of the use of a staple, the tines to either side of the panel can both be driven into the ground by a single driving action. The tines of the staple may be of generally equal length, or one may be longer than the other so that only one of the tines is driven into the ground to any significant extent. Furthermore, the bridging portion of the staple serves to restrict upward movement of the panel. Although the method was conceived for use in the temporary restriction of the migration of small animals, it can also be used to form a permanent or semi-permanent barrier.

It is to be noted that patent document DE-U-8604767 describes a garden snail barrier in which an upstanding rigid panel on the ground is held between pairs of posts.

The method preferably further includes the step of setting another panel in the trench next to the first mentioned panel so that adjacent ends of the panels overlap. With this technique, a barrier of any desired length can be constructed. Furthermore, by overlapping adjacent panels by differing amounts at the tops and bottoms of the panels, account can be taken of any undulation in the ground level. The staples may be disposed at the overlaps so that one tine engages one of the panels and the other tine engages the other panel.

The spacing between the tines is preferably substantially greater than the thickness of the panel or the overlapping panels, and the direction of spacing of the tines is preferably inclined relative to the thickness direction of the panel or panels so that the panel or panels are closely sandwiched between the tines.

The method may further include the steps of: setting another panel in the trench next to and spaced from the first mentioned panel; and setting a pitfall trap in the ground so that the first panel and the further panel both abut a side wall of the pitfall trap. This is particularly useful when a turn needs to be made in the barrier formed by the panels. In this case, the side wall of the trap is preferably polygonally-cylindrical (for example rectangularly-, pentagonally-, hexagonally-, heptagonally- or octagonally-cylindrical) and each panel abuts face-to-face against a respective portion of the side wall of the trap. This assists in maintaining the integrity of the barrier.

In one example, the, or each, panel is substantially flat. However, in another example, the panel has a main portion which is substantially flat, and a lip which extends along one edge of the main portion so that the panel is generally L-shaped in cross-section. In this case, the trench that is cut is at least as wide as the width of the lip, the panel is set into the trench with its lip lowermost, and the method further includes the step of backfilling the trench above the lip. Preferably, the lip is arranged so that it projects from the main portion of the panel in the direction away from the worksite. The lip provides a deterrent to small animals burrowing under the panel into the worksite. In the case where the tines of the staple are of unequal lengths, the length of the shorter tine is preferably less than the height of the main portion of the panel so that the shorter tine does not pierce the lip. The length of the longer tine is preferably greater than the height of the main portion of the panel.

Alternatively, a strip of biodegradable flexible material may be releasably attached along one edge thereof to one edge of the panel; in this case, the panel is set into the trench with said one edge lowermost, the strip is set in the trench so that it extends across the bottom of the trench, and the method further includes the step of backfilling the trench above the lip. When the panels are subsequently removed from the ground, the strip detaches itself from the panel and remains buried in the ground where, in time, it biodegrades.

Preferably, the, or each, panel is formed of plastics material (such as polypropylene), having at least one face that is smooth. This makes it difficult for many small animals to scale that face of the panel. The other face of the panel may be non-smooth so as to facilitate scaling of that face of the panel.

According to a second aspect of the invention, there is provided a kit for use in performing the method of the first aspect of the invention, the kit comprising a plurality of such panels, a plurality of such staples, a machine for cutting the trench and a hammer or the like for driving the staples into the ground. The kit may also include at least one container having a polygonally-cylindrical side wall, for forming a pitfall trap.

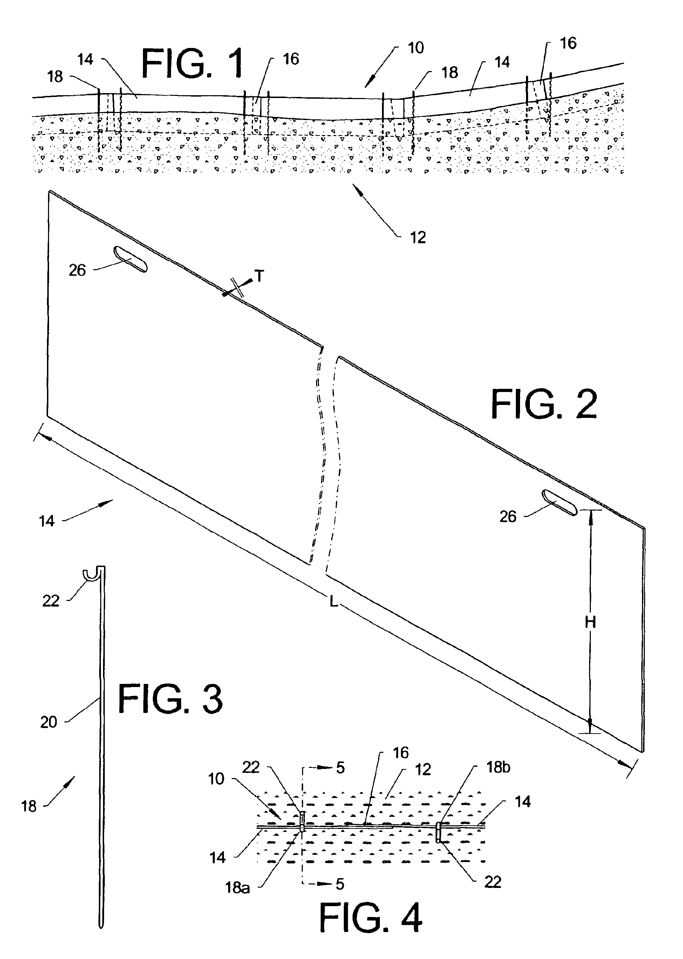

Further detail of the present invention will be described, purely by way of example, with reference to Figures 2 and 6 to 16 of the accompanying drawings which show embodiments of the invention, and Figures 1 and 3 to 5F which are useful for understanding the invention. Specifically, in the drawings:
- Figure 1: is a sectioned view through a piece of ground showing, situated beyond the section plane, a barrier;
- Figure 2: is an isometric view, on a larger scale and partly cut away, of one of a number of panels used in the barrier of Figure 1 and of the first embodiment of the invention;
- Figure 3: is a side view of one of a number of road pins used in the barrier of Figure 1;
- Figure 4: is a plan view of part of the barrier of Figure 1;
- Figures 5A-5F: are sectioned views, taken on the section line 5-5 in Figure 4, showing various stages in the construction of the barrier of Figure 1;
- Figure 6: is an isometric view of one of a number of staples used in a first embodiment of the invention;
- Figure 7: is a sectioned view similar to Figure 5F, but taken on the section line 7-7 in Figure 8 and showing the first embodiment of barrier;
- Figure 8: is a plan view similar to Figure 4, but showing the first embodiment of the invention;
- Figure 9: is an isometric view, partly cut away, of one of a number of panels used in the barrier of a second embodiment of the invention;
- Figure 10: is an isometric view of one of a number of staples used in the second embodiment of the invention;
- Figures 11A-B: are sectioned views similar to Figures 5E and 5F respectively, but showing the barrier of the second embodiment;
- Figure 12: is an isometric view, partly cut away, of one of a number of panels used in the barrier of a third embodiment of the invention;
- Figure 13: is a plan view of part of the barrier of the third embodiment, at a location where there is a turn in the barrier, and also showing one form of a pitfall trap;
- Figure 14: is a sectioned view, taken on the section line 14-14 in Figure 13; and
- Figures 15-16: are isometric views of other forms of the pitfall trap.

Referring to Figures 1 to 4, a barrier 10 (which does not form an embodiment of the invention) is constructed in and above a piece of ground 12. The barrier comprises a series of rectangular panels 14 of polypropylene. The faces of the panels 14 are smooth. Each panel 14 may typically have a thickness T of 3 mm to 6 mm (⅛" to ¼"), a length L of about 2.4 m (8 ft) and a height H of about 0.6 m (2 ft), and the panels 14 may conveniently be formed by cutting a 2.4 m x 1.2 m (8 by 4) sheet of polypropylene in half. However, the panels 14 may have other dimensions as required. The panels 14 are set in the ground 12 to about half their height (i.e. to a depth of about 0.3 m (1 ft) and end-to-end with a slight overlap 16 of adjacent ends. A series of steel or iron road pins 18 are implanted in the ground 12 alternately to one side and to the other side of the series of panels 14. The shafts 20 of the road pins 18 restrain sideways movement of the panels 14 in the ground 12, and the hooks 22 at the tops of the road pins 18 are arranged to restrain upwards movement of the panels 14 out of the ground 12. As can be seen in Figure 1, undulation in the ground level can be taken into account by uneven overlap 16 of the adjacent ends of the panels 14.

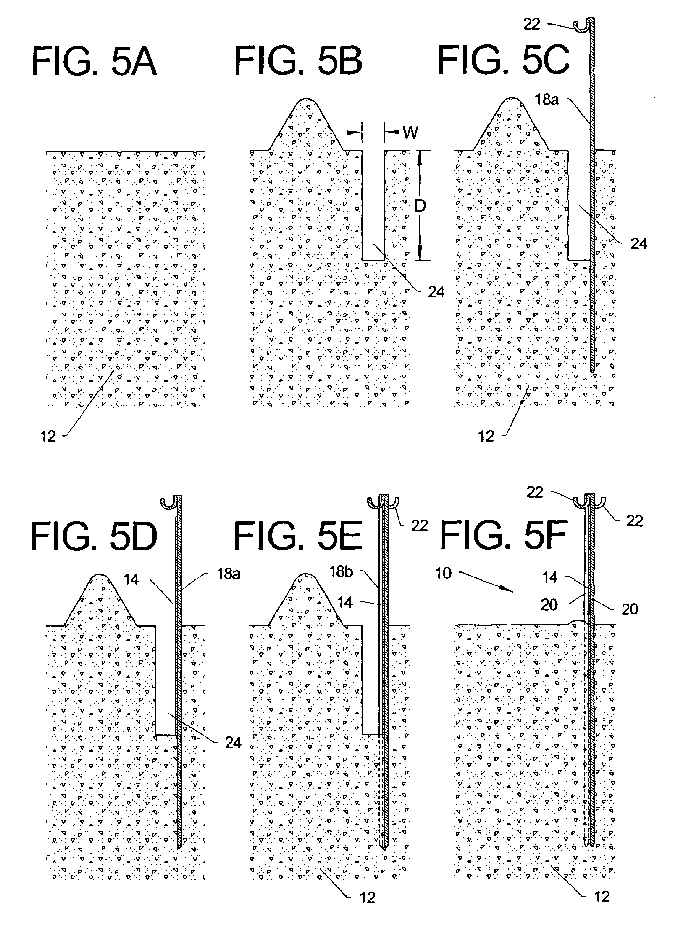

The method of construction of the barrier 10 of Figures 1 to 4 will now be described with reference to Figures 5A to 5F. Figure 5A shows the unprepared piece of ground 12. A trench 24 is cut in the ground 12 to a depth D of about 0.3 m (1 ft) and of any convenient width W greater than twice the thickness T of the panels, as shown in Figure 5B. The trench may be cut in any of a variety of different ways, for example using a single-bladed plough or a mini-digger with a 0.15 m (6") or 0.3 m (1 ft) wide bucket, but preferably using a trenching wheel so that the trench 24 has clean vertical or near-vertical sides. A series of the road pins 18a are then driven into the ground 12, using a hammer or other suitable tool, immediately to one side of the trench 24 and with their hooks 22 overhanging the trench 24, as shown in Figure 5C, so that the distance between the foot of the trench 24 and the underside of the hooks 22 of the road pins is slightly greater than the height H of the polypropylene panels 14. The spacing between adjacent road pins 18a is not greater than the length L of the polypropylene panels 14 less the desired amount of overlap 16 of adjacent panels 14. The panels 14 are then set in the trench 24 facing against the pins 18a, as shown in Figure 5D, and with the desired amount of overlap 16 of adjacent panels 14. A second series of the road pins 18b are then driven into the ground 12, against the opposite faces of the panels 14 and with their hooks 22 overhanging the panels 14, as shown in Figure 5E. The trench 24 is then backfilled with the material that was initially removed from it, as shown in Figure 5F.

It will therefore be appreciated that the panels 14 are buried to about half of their height in the ground 12. The shafts 20 of the pins 18 on alternate sides of the panels 14 restrict sideways flexing of the panels 14 above ground level. The hooks 22 of the pins restrict upwards movement of the panels 14 out of the ground 12. Small animals cannot pass from one side of the barrier 10 to the other unless they can scale the smooth sides of, or jump over, the panels 14 reaching a height of about 0.3 m (1 ft) above ground level, or unless they can burrow into the ground 12 to a depth of at least about 0.3 m (1 ft) under the panels 14. Once the barrier 10 has been constructed around a worksite, as many small animals as possible that are within the barrier 10 are manually collected and evacuated to the other side of the barrier 10. To assist collection, sheets of old carpet, roofing felt or corrugated "tin" may be laid on the ground, encouraging the animals to congregate under the sheets. After a time, the sheets are lifted, and the animals are collected up and evacuated.

Once the work on the site is complete, the barrier 10 may be removed, simply by pulling the pins 18 out of the ground, and then by drawing the panels 14 out of the ground. To facilitate this, the sheets 14 may be provided with hand-holes 26, as shown in Figure 2, adjacent their upper edges.

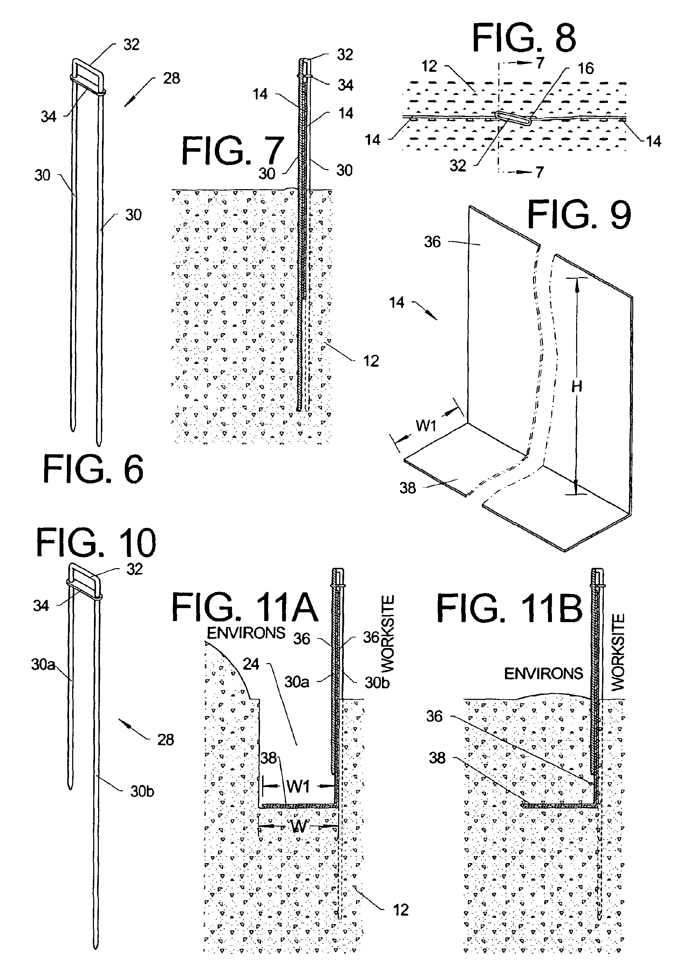

The barrier of the first embodiment of the invention will now be described with reference to Figures 6 to 8. The first embodiment and its method of construction are similar to the arrangement of Figures 1 to 5F except in the following respects. Instead of using pairs of individual road pins 18 driven into the ground 12 on opposite sides of the panels 14, the second embodiment uses steel or iron staples 28 as shown in Figure 6. Each staple 28 has a pair of parallel tines 30 integrally formed with a bridging portion 32 connecting the upper ends of the tines 30. The tines 30 are also connected adjacent their upper ends by a strengthening strip 34. The spacing between the tines 30 may, for example, be about 75 mm (3"). In the construction of the second embodiment of barrier, after a pair of the panels 14 have been set in the trench with their ends overlapping, a staple 28 is driven into the ground 12, with the bridging portion 32 inclined relative to the longitudinal direction of the panels 14 as shown in Figure 8, so that the faces of the panels 14 at the overlap 16 are closely sandwiched between the tines, as shown in Figure 7. Preferably, the staple 28 is not driven into the ground 12 so far that the strengthening strip 34 touches the upper edge(s) of the panel(s) 14 so as to avoid damaging the panel(s) 14. When the staple 28 is subsequently to be removed from the ground 12, a hook on a ratchet jack or on the arm of mini-digger can conveniently be inserted into the space between the bridging portion 32 and the strengthening strip 34 of the staple 28.

The second embodiment of the invention will now be described with reference to Figures 9 to 11B. The second embodiment and its method of construction are similar to the first embodiment of Figures 6 to 8 except in the following respects. As shown in Figure 9, the panel 14 of the second embodiment is L-shaped in cross-section, having a main portion 36, similar to the panel 14 of the first embodiment, and a lip 38 having a width W1 of about 0.2 to 0.3 m (8" to 12"). The panel 14 may be formed by heat-folding a flat sheet of polypropylene, or by welding the main portion 36 and the lip 38 together. The staple 28 of Figure 10 is similar to the staple 28 of Figure 6 except that one of its tines 30a is substantially shorter than the other tine 30b, extending downwards from the strengthening strip 34 by a distance less than the height H of the main portion 36 of the panel 14. In the construction of the barrier of the second embodiment, the width W of the trench 24 that is cut is greater than the width W1 of the lip 38 of the panel 14, as shown in Figure 11A. A pair of panels 14 are set in the trench 24 with their lips 38 extending from their main portions 36 in the direction away from the worksite and with the ends of their main portions 36 and lips 38 overlapping. The longer tine 30b of the staple 28 is then driven into the ground 12 on the opposite side of the main portions 36 to the lips 38, as shown in Figure 11A, and then the trench is backfilled, as shown in Figure 11B.

The effect of the lip 38 of the barrier of the second embodiment is that, if a small animal burrows underground at a depth less than about 0.3m (1 ft) towards the worksite, it will reach the main portion 36 of the barrier. If it then burrows downwards in an attempt to burrow under the barrier, it will then reach the lip 38, which will have the effect of preventing further downward burrowing, and will lead the animal to re-trace its steps, to burrow sideways above the lip 38 or to begin burrowing in the direction away from the worksite. Although the lip 38 provides this benefit, it should be noted that the lip 38 will make subsequent removal of the panel 14 more difficult than in the case of the first and second embodiments, and that some excavating of the ground may be required in order to release the panel 14 from the ground. In order to overcome this disadvantage, the lip 38 may be formed from a flexible material to facilitate drawing of the panel 14 out of the ground.

In a modification to the embodiment of Figures 9 to 11B, the main portion 36 of the barrier and the lip 38 may be formed from a single panel in which a groove is routed so as to facilitate creasing of the panel so as to form the main portion 36 and the lip 38. In another modification, the panel may be of "twin wall" construction with ribs extending in the longitudinal direction of the barrier so that the panel can be creased between an adjacent pair of ribs so as to form the main portion 36 and the lip 38. In a further modification, in addition to, or instead of, forming the lip 38 at the bottom of the main portion 36 of the barrier, a lip may be formed at the top of the main portion 36 of the barrier inclined at an angle of, for example, 45 degrees to the main portion 36 away from the worksite. Such a lip can make it even more difficult for a small animal to scale the barrier. Two or more holes are formed in the upper lip adjacent the main portion through which the shorter tines 30a of the staples 28 pass.

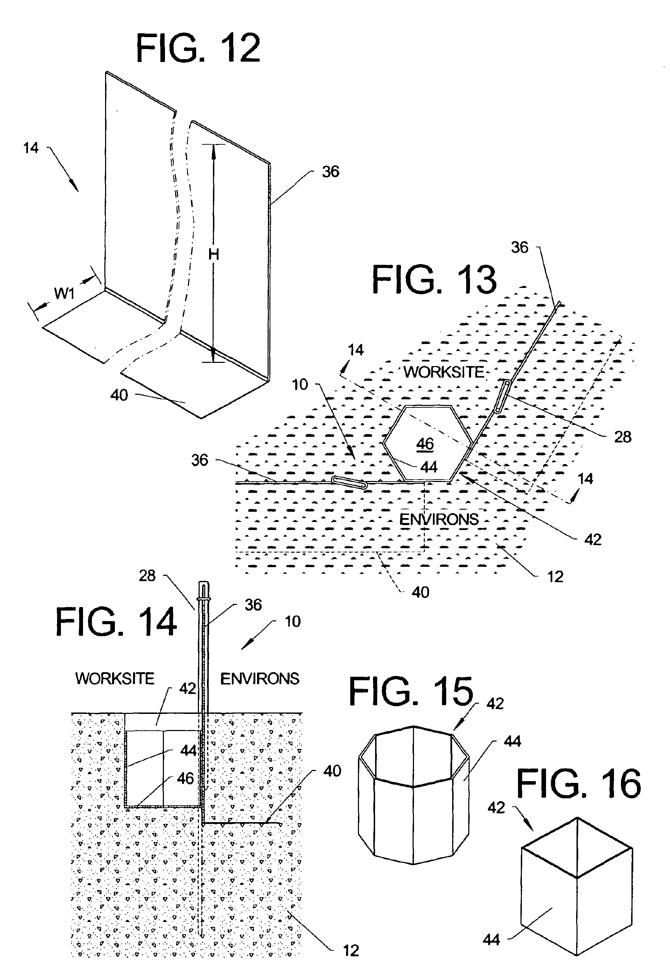

The third embodiment of the invention will now be described with reference to Figures 12 to 14. The third embodiment and its method of construction are similar to the second embodiment of Figures 9 to 11B except in the following respects. The panel 14 of Figures 12 to 14 is formed of a rigid or semi-rigid main portion 36 similar to the panel 14 of Figures 1 to 8, but having a strip 40 of thin flexible biodegradable material releasably attached along one edge of the strip 40 to the lower edge of the main portion 36 of the panel 14. The main portion 36 and the strip 40 may be releasably attached in any convenient way, for example by a weak weld, by a weak adhesive, or by clips. During construction of the barrier 10 of Figures 12 to 14, care is taken, when the panel 14 is set in the trench, to ensure that the strip 40 lies generally flat across the bottom of the trench. In use, the strip 40 of the barrier 10 of Figures 12 to 14 has a similar effect to the lip 38 of the barrier 10 of Figures 9 to 11B. However, when the barrier 10 of Figures 12 to 14 is subsequently removed, the main portion 36 is simply withdrawn from the ground 12 (after the staples 28 have been removed), and the intention is that the main portion 36 separates from the strip 40, leaving the strip 40 in the ground 12. Because the strip 40 is buried substantially horizontally in the ground 12, it does not provide any significant impediment to burrowing animals. Also, because the strip 40 is of biodegradable material, it does not have any long-lasting damaging effects.

Figures 13 and 14 show a turn in the barrier 10 through an angle of about 60°. To facilitate the construct of such a turn, a pitfall trap 42 is set in the ground 12 at the turn. The pitfall trap 42 is in the form of container having a cylindrical side wall 44, a closed bottom 46 and an open top. Rather than being circularly-cylindrical as is conventional, the side wall 44 of the trap 42 is hexagonally-cylindrical, and the trap 42 is set in the ground 12 so that panels 14 of the two portions of the barrier 10 to either side of the trap overlap with and are generally in face-to-face contact with the two of the sides of the side wall 44. The idea is that small animals attempting to migrate in either direction between the worksite and its environs through the gap between panels 14 will fall into the trap 42 (unless they are able to jump the trap 42), from which they can subsequently be manually recovered and placed in the environs. Other forms may be employed for the shape of the side wall 44 of the trap 42, such as the octagonal-walled trap of Figure 15 (which is particularly suitable for 45° and 90° turns in the barrier 10) and the square-walled trap of Figure 16 (which is particularly suitable for 90° turns in the barrier 10). It will be appreciated that the pitfall traps 42 shown in Figures 13 to 16 may also be used in the other embodiments of the invention described above.

In a modification to the embodiments of the invention described above, instead of both faces of the panels 14 being smooth, one face may be smooth and the other face may have surface formations such as a chequered pattern. In this case, the panels 14 are arranged so that the non-smooth face faces the worksite and the smooth face faces the environs. The non-smooth surface may facilitate climbing animals to scale the barrier to escape from the worksite to the environs, and yet the smooth surface makes it difficult or impossible for them to scale the barrier so as to enter the worksite from the environs.

It should be noted that the embodiments of the invention have been described above purely by way of example and that many other modifications and developments may be made thereto within the scope of the present invention as defined in the appended claims.

## Claims

1. A method of restricting migration of animals from the ground (12) on one side of a line to the ground on the other side of the line, the method comprising the steps of:
cutting a trench (24) in the ground along the line;
setting a rigid or semi-rigid panel (14) in the trench so that the panel projects upwards above the level of the ground;
providing a staple (28) having a pair of elongate tines (30,30; 30a,30b) connected by a bridging portion (32,34) so that the tines extend downwardly, from the bridging portion, on either side of the panel to locate the panel therebetween; and
driving the staple into the ground, after the panel has been set in the ground, so that the tines restrict sideways movement of the panel and the bridging portion restricts upward movement of the panel.

2. A method as claimed in claim 1, further including the step of setting another panel (14) in the trench next to the first mentioned panel so that adjacent ends of the panels overlap (16).

3. A method as claimed in claim 2, wherein the staple is disposed at the overlap (16) so that one tine engages one of the panels and the other tine engages the other panel.

4. A method as claimed in any preceding claim, wherein the spacing between the tines is substantially greater than the thickness of the panel or the overlapping panels, and the direction of spacing of the tines is inclined relative to the thickness direction of the panel or panels so that the panel or panels are closely sandwiched between the tines.

5. A method as claimed in any preceding claim, further including the steps of: setting another panel (36) in the trench next to and spaced from the first mentioned panel; and setting a pitfall trap in the ground so that the first panel and the further panel both abut a side wall of the pitfall trap.

6. A method as claimed in any preceding claim, wherein:
the panel has a main portion (36) which is substantially flat, and a lip (38) which extends along one edge of the main portion so that the panel is generally L-shaped in cross-section;
the trench that is cut is at least as wide as the width of the lip;
the panel is set into the trench with its lip lowermost; and
the method further includes the step of backfilling the trench above the lip.

7. A method as claimed in claim 6, wherein the tines (30a,30b) of the staple are of unequal lengths, the length of the shorter tine (30a) being less than the height (H) of the main portion of the panel.

8. A method as claimed in claim 7, wherein the length of the longer tine (30b) is greater than the height of the main portion of the panel.

9. A kit for use in performing a method as claimed in any preceding claim, the kit comprising a plurality of such panels (14), a plurality of such staples (28), a machine for cutting the trench and a hammer or the like for driving the staples into the ground.

## Patentansprüche

1. Verfahren zur Beschränkung der Wanderung von Tieren vom Boden (12) auf einer Seite einer Linie zum Boden auf der anderen Seite der Linie, wobei das Verfahren die folgenden Schritte umfasst:
Ausheben eines Grabens (24) im Boden entlang der Linie,
Aufstellen einer starren oder halbstarren Tafel (14) in dem Graben, so dass die Tafel über das Niveau des Bodens vorragt,
Bereitstellen einer Klammer (28) mit einem Paar länglicher Zinken (30, 30; 30a, 30b), die über einen Überbrückungsabschnitt (32, 34) verbunden sind, so dass sich die Zinken vom Überbrückungsabschnitt auf beiden Seiten der Tafel nach unten erstrecken, um die Tafel dazwischen zu platzieren, und
Treiben der Klammer in den Boden nach dem Aufstellen der Tafel im Boden, so dass die Zinken seitliche Bewegungen der Tafel beschränken und der Uberbrückungsabschnitt nach oben gehende Bewegungen der Tafel beschränkt.

2. Verfahren nach Anspruch 1, ferner mit dem Schritt des Aufstellens einer weiteren Tafel (14) im Graben neben der erstgenannten Tafel, so dass sich benachbarte Ende der Tafeln überlappen (16).

3. Verfahren nach Anspruch 2, wobei die Klammer an der Überlappung (16) angeordnet ist, so dass eine Zinke eine der Tafeln in Eingriff nimmt und die andere Zinke die andere Tafel in Eingriff nimmt.

4. Verfahren nach einem der vorhergehenden Ansprüche, wobei der Abstand zwischen den Zinken wesentlich größer als die Dicke der Tafel oder der sich überlappenden Tafeln ist und die Richtung des Abstands der Zinken bezüglich der Dickenrichtung der Tafel oder Tafeln geneigt ist, so dass die Tafel oder Tafeln eng zwischen den Zinken eingeklemmt sind.

5. Verfahren nach einem der vorhergehenden Ansprüche, ferner mit den Schritten des Aufstellens einer weiteren Tafel (36) in den Graben neben der erstgenannten Tafel und beabstandet von dieser und des Anlegens einer Fallgrube im Boden, so dass sowohl die erste Tafel als auch die weitere Tafel an eine Seitenwand der Fallgrube anstoßen.

6. Verfahren nach einem der vorhergehenden Ansprüche, wobei
die Tafel einen Hauptabschnitt (36) hat, der im Wesentlichen flach ist, sowie eine Lippe (38), die sich entlang eines Rands des Hauptabschnitts erstreckt, so dass die Tafel im Querschnitt allgemein L-förmig ist,
der ausgehobene Graben mindestens so breit wie die Breite der Lippe ist,
die Tafel so in dem Graben aufgestellt wird, dass ihre Lippe unten liegt, und
das Verfahren ferner den Schritt des Auffüllens des Grabens über der Lippe umfasst.

7. Verfahren nach Anspruch 6, wobei die Zinken (30a, 30b) der Klammer ungleich lang sind, wobei die Länge der kürzeren Zinke (30a) kleiner als die Höhe (H) des Hauptabschnitts der Tafel ist.

8. Verfahren nach Anspruch 7, wobei die Länge der längeren Zinke (30b) größer als die Höhe des Hauptabschnitts der Tafel ist.

9. Bausatz zur Verwendung bei der Durchführung eines Verfahrens nach einem der vorhergehenden Ansprüche, wobei der Bausatz mehrere derartige Tafeln (14), mehrere derartige Klammern (28), eine Maschine zum Ausheben des Grabens und einen Hammer oder dgl. zum Treiben der Klammern in den Boden umfasst.

## Revendications

1. Procédé pour restreindre la migration d'animaux du sol (12) d'un côté d'une ligne vers le sol de l'autre côté de la ligne, le procédé comprenant les étapes consistant à :
creuser une tranchée (24) le long de la ligne ;
installer un panneau (14) rigide ou semi-rigide dans la tranchée de sorte que le panneau dépasse vers le haut au dessus du niveau du sol ;
disposer un crampon (28) ayant une paire de dents allongées (30, 30 ; 30a, 30b) reliées par une partie en pont (32, 34) de sorte que les dents s'étendent vers le bas, à partir de la partie en pont, de chaque côté du panneau pour placer le panneau entre elles ; et
enfoncer le crampon dans le sol, après avoir installé le panneau dans la tranchée, de sorte que les dents limitent le mouvement latéral du panneau et la partie en pont limite le mouvement vers le haut du panneau.

2. Procédé selon la revendication 1, comprenant en en outre l'étape consistant à installer un autre panneau (14) dans la tranche à côté du panneau mentionné en premier de sorte que les extrémités adjacentes des panneaux se chevauchent (16).

3. Procédé selon la revendication 2, dans lequel le crampon est disposé au niveau du chevauchement (16) de sorte qu'une dent coince l'un des panneaux et l'autre dent coince l'autre panneau.

4. Procédé selon l'une quelconque des revendications précédentes, dans lequel l'espacement entre les dents est sensiblement plus grand que l'épaisseur du panneau ou des panneaux se chevauchant, mais la direction d'espacement des dents est inclinée par rapport à la direction de l'épaisseur du ou des panneaux, de sorte que le(s) panneau(x) est/sont étroitement pris en sandwich entre les dents.

5. Procédé selon l'une quelconque des revendications précédentes, comprenant en outre les étapes consistant à : installer un autre panneau (36) dans la tranchée à côté mais à distance du panneau mentionné en premier ; et installer un piège dans le sol de sorte que le premier panneau et l'autre panneau s'appuient tous les deux contre une paroi latérale du piège.

6. Procédé selon l'une quelconque des revendications précédentes, dans lequel :
le panneau comporte une partie principale (36) qui est sensiblement plate et une lèvre (38) qui s'étend le long d'un bord de la partie principale de sorte que le panneau a une section dans l'ensemble en forme de L;
la tranchée que l'on creuse est au moins aussi large que la largeur de la lèvre ;
on installe le panneau dans la tranchée avec sa lèvre tout au fond ; et
le procédé comprend en outre l'étape consistant à remplir la tranchée au dessus de la lèvre.

7. Procédé selon la revendication 6, dans lequel les dents (30a, 30b) du crampon sont de longueurs inégales, la longueur de la dent la plus courte (30a) étant inférieure à la hauteur (H) de la partie principale du panneau.

8. Procédé selon la revendication 7, dans lequel la longueur de la dent la plus longue (30b) est supérieure à la hauteur de la partie principale du panneau.

9. Kit pour mettre en oeuvre un procédé selon l'une quelconque des revendications précédentes, comprenant une pluralité de ces panneaux (14), une pluralité de ces crampons (28), une machine pour creuser la tranchée et un marteau ou quelque chose de ce genre pour enfoncer les crampons dans le sol.
